# EUROPÄISCHE PATENTSCHRIFT

(11) **EP 0 230 337 B1**
(45) Veröffentlichungstag und Bekanntmachung des Hinweises auf die Patenterteilung: **19.05.1993**
(21) Anmeldenummer: 87200076.5
(22) Anmeldetag: 19.01.1987
(51) Int. Cl.: H04N 9/79, H04N 5/782, H03K 23/00

(54) **Schaltungsanordnung zur Frequenzteilung**
Frequency-division circuit arrangement
Arrangement de circuit pour la division de fréquence

(30) Priorität: 23.01.1986 DE 3601858
(43) Veröffentlichungstag der Anmeldung: 29.07.1987
(73) Patentinhaber: Philips Patentverwaltung GmbH, 22335 Hamburg (DE); Philips Electronics N.V., 5621 BA Eindhoven (NL)
(72) Erfinder: Wölber, Jörg, D-2080 Pinneberg (DE)
(74) Vertreter: Hartmann, Heinrich, Dipl.-Ing.

(56) Entgegenhaltungen:
- IEEE TRANSACTIONS ON CONSUMER ELECTRONICS, nr. 3, August 1984, Seiten 382-289, New York; K.H. REHFELDT : "A multistandard chip set for VHS VCRS".
- IEEE TRANSACTIONS ON CONSUMER ELECTRONICS, nr. 4, November 1984, Seiten 568-574, New York; A. SHIBATA et al.: "The new chroma signal recording system for 8mm video".

## Beschreibung

Die Erfindung betrifft eine Schaltungsanordnung für einen Videorecorder zum Erzeugen eines zeilenfrequenten Signals mittels verschiedener Frequenzteiler aus einem Eingangssignal, mit
- einem Eingangsanschuß zum Empfangen des Eingangssignals und
- einem Ausgangsanschluß zum Abgeben des zeilenfrequenten Signals.

Bei der Herstellung von Videorecordern ist es erwünscht, eine einzige Platine für verschiedene Normen auszulegen, z.B. für Video 8 oder VHS nach dem PAL- oder NTSC-Verfahren, um kostengünstiger produzieren zu können. Auf einer solchen Platine sollten dann integrierte Schaltungen gesetzt werden, die für jede dieser Normen geeignet sind und die nur noch für die jeweilige Norm eingestellt werden müssen.

In der integrierten Schaltung TDA 3755, die als PAL/NTSC-Synchronisier-Prozessor für VHS-Videorecorder dient, wird die eingangs genannte Schaltungsanordnung verwendet. Diese dient dazu, ein in einem gesteuerten Oszillator erzeugtes Signal nach der NTSC-Norm durch 320 bzw. nach der PAL-Norm durch 321 zu teilen. Ein Phasenvergleicher erzeugt ein Steuersignal für den Oszillator entsprechend der Phasendifferenz eines empfangenen zeilenfrequenten Signals und des Ausgangssignals der Schaltungsanordnung.

In der Schaltungsanordnung wird das Eingangssignal über einen Frequenzteiler mit einem Teilerverhältnis von 2 einem ersten Eingang einer Unterdrückungsschaltung zugeleitet. Der Ausgang der Unterdrückungsschaltung ist mit einem das zeilenfrequente Signal liefernden Frequenzteiler mit einem Teilerverhältnis von 160 verbunden. Das zeilenfrequente Signal wird über einen abschaltbaren Rückkopplungszweig mit einem weiteren Frequenzteiler mit einem Teilerverhältnis von 2 einem zweiten Eingang der Unterdrückungsschaltung zugeleitet. Eine Flanke, d.h. ein Zustandswechsel von einem niedrigeren auf ein höheres Potential oder umgekehrt von einem höheren auf ein niedrigeres Potential, im Ausgangssignal der Unterdrückungsschaltung tritt gleichzeitig mit einer Flanke im Signal am ersten Eingang auf, wenn keine Flanke im Signal am zweiten Eingang vorhanden ist. Die Unterdrückungsschaltung verhindert beim Auftreten einer Flanke im Signal am zweiten Eingang, daß die folgende Flanke des Signals am ersten Eingang eine Flanke im Ausgangssignal verursacht. Der Rückkopplungszweig ist ausgeschaltet, wenn Signale nach der NTSC-Norm verarbeitet werden.

Aus IEEE Transactions on Consumer Elektronics, Nr. 4, November 1984, Seiten 568-574, Shibita et al., "The New Croma Signal Recording System for 8mm Video", ist ein System zur Verarbeitung eines Chrominanzsignals in der NTSC-Norm bekannt, welches einen spannungsgesteuerten Oszillator umfaßt, der beim 189-fachen der Zeilenfrequenz schwingt. Die Frequenz dieser Schwingung wird in einem ersten Frequenzteiler um den Faktor 3 und in einem zweiten Frequenzteiler um den Faktor 63 geteilt, um einem Phasenkomparator zum Phasenvergleich mit einem Horizontalsynchronsignal zugeleitet zu werden.

Der Erfindung liegt die Aufgabe zugrunde, eine Schaltungsanordnung der eingangs genannten Art so auszubilden, daß diese einen ersten Schaltungsteil enthält, der bei verschiedenen Videorecodernormen verwendbar ist und einen zweiten Teil, der der jeweiligen Norm angepaßt ist.

Eine erste Lösung der Aufgabe ist dadurch gekennzeichnet, daß ein erster Schaltungsteil ein erstes Verknüpfungsglied mit zwei Eingängen und einem Ausgang und einen ersten Frequenzteiler mit einem Teilerverhältnis von 9 enthält, daß der Eingangsanschluß mit einem ersten Eingang des Verknüpfungsgliedes gekoppelt ist, dessen Ausgang mit einem Eingang des ersten Frequenzteilers gekoppelt ist, daß das Verknüpfungsglied eine Flanke im Signal am ersten Eingang eingefügt, wenn in einem Signal an dem zweiten Eingang des Verknüpfungsgliedes eine Flanke auftritt, daß ein mit einem Ausgang des ersten Frequenzteilers gekoppelter zweiter Schaltungsteil einen zweiten Frequenzteiler und einen dritten Frequenzteiler mit einem Teilerverhältnis von 3 enthält, dessen Ausgang mit dem Ausgangsanschluß gekoppelt ist, daß ein vierter Frequenzteiler mit einem Teilerverhältnis von 2 im Signalweg zwischen dem Eingangsanschluß und dem Ausgangsanschluß angeordnet ist und daß folgende Schaltungsmaßnahmen einzeln oder in Kombination vorgesehen sind,
a) für die VHS-NTSC-Norm ist der Ausgang des ersten Frequenzteilers über den zweiten Frequenzteiler mit einem Teilerverhältnis von 6 einerseits mit einem ersten Eingang eines UND-Gatters und andererseits über den dritten Frequenzteiler mit einem zweiten Eingang des UND-Gatters gekoppelt, dessen Ausgang mit dem zweiten Eingang des ersten Verknüpfungsgliedes gekoppelt ist,
b) für die VHS-PAL-Norm ist der Ausgang des ersten Frequenzteilers über den zweiten Frequenzteiler mit einem Teilerverhältnis von 6 einerseits über einen fünften Frequenzteiler mit einem Teilerverhältnis von 2 mit dem zweiten Eingang des ersten Verknüpfungsgliedes und andererseits mit dem dritten Frequenzteiler gekoppelt,
c) für die Video 8-NTSC-Norm ist der Ausgang des ersten Frequenzteilers über den zweiten Frequenzteiler mit einem Teilerverhältnis von 7 mit dem dritten Frequenzteiler gekoppelt,
d) für die Video 8-PAL-Norm ist der Ausgang des ersten Frequenzteilers über den zweiten Frequenzteiler mit einem Teilerverhältnis von 7 einerseits über einen fünften Frequenzteiler mit einem Teilerverhältnis von 2 mit dem zweiten Eingang des ersten Verknüpfungsgliedes und andererseits mit dem dritten Frequenzteiler gekoppelt.
wobei, im Fall, daß verschiedene dieser Schaltungsmaßnahmen in Kombination zusammengeschaltet sind, im zweiten Schaltungsteil Schalter eingesetzt sind, zum Herstellen der jeweils für die bestimmte Norm vorgeschriebene Verbindung zwischen den einzelnen Schaltelementen.

Eine zweite Lösung der Aufgabe ist dadurch gekennzeichnet, daß ein erster Schaltungsteil ein erstes Verknüpfungsglied mit zwei Eingängen und einem Ausgang und einen ersten Frequenzteiler mit einem Teilerverhältnis von 8 enthält, daß der Eingangsanschluß mit einem ersten Eingang des ersten Verknüpfungsgliedes gekoppelt ist, dessen Ausgang mit einem Eingang des ersten Frequenzteilers gekoppelt ist,
daß ein mit einem Ausgang des ersten Frequenzteilers gekoppelter zweiter Schaltungsteil ein zweites Verknüpfungsglied mit zwei Eingängen und einem Ausgang, einen zweiten Frequenzteiler und einen dritten Frequenzteiler enthält, dessen Ausgang mit dem Ausgangsanschluß gekoppelt ist,
daß beide Verknüpfungsglieder eine Flanke im Signal am ersten Eingang einfügen, wenn in einem Signal am zweiten Eingang des betreffenden Verknüpfungsgliedes eine Flanke auftritt,
daß ein vierter Frequenzteiler mit einem Teilerverhältnis von 2 im Signalweg zwischen dem Eingangsanschluß und dem Ausgangsanschluß angeordnet ist und daß folgende Schaltungsmaßnahmen einzeln oder in Kombination angewendet sind,
a) für die VHS-NTSC-Norm ist der Ausgang des zweiten Verknüpfungsgliedes über den zweiten Frequenzteiler mit einem Teilerverhältnis von 4 mit dem dritten Frequenzteiler mit einem Teilerverhältnis von 5 gekoppelt,
b) für die VHS-PAL-Norm ist der Ausgang des zweiten Verknüpfungsgliedes über den zweiten Frequenzteiler mit einem Teilerverhältnis von 3 einerseits über einen fünften Frequenzteiler mit einem Teilerverhältnis von 2 mit dem zweiten Eingang des ersten Verknüpfungsgliedes gekoppelt und andererseits mit dem dritten Frequenzteiler mit einem Teilerverhältnis von 7, dessen Ausgang über einen sechsten Frequenzteiler mit einem Teilerverhältnis von 2 mit dem zweiten Eingang des zweiten Verknüpfungsgliedes gekoppelt ist,
c) für die Video 8-NTSC-Norm ist der Ausgang des zweiten Verknüpfungsgliedes mit dem Eingang des zweiten Frequenzteilers mit einem Teilerverhältnis von 4 gekoppelt, dessen Ausgang mit dem zweiten Eingang des ersten Verknüpfungsgliedes, über einen fünften Frequenzteiler mit einem Teilerverhältnis von 2 mit dem zweiten Eingang des zweiten Verknüpfungsgliedes und mit einem Eingang des dritten Frequenzteilers mit einem Teilerverhältnis von 7 gekoppelt ist,
d) für die Video 8-PAL-Norm ist der Ausgang des zweiten Verknüpfungsgliedes über den zweiten Frequenzteiler mit einem Teilerverhältnis von 3 mit dem dritten Frequenzteiler mit einem Teilerverhältnis von 8 gekoppelt, dessen Ausgang über einen sechsten Frequenzteiler mit einem Teilerverhältnis von 2 mit dem zweiten Eingang des ersten und zweiten Verknüpfungsgliedes gekoppelt ist.
wobei, im Fall, daß verschiedene dieser Schaltungsmaßnahmen in Kombination zusammengeschaltet sind, im zweiten Schaltungsteil Schalter eingesetzt sind, zum Herstellen der jeweils für die bestimmte Norm vorgeschriebenen Verbindung zwischen den einzelnen Schaltelementen
Die erfindungsgemäße Schaltungsanordnung läßt sich so aufbauen, daß die Schaltungsmaßnahmen a bis d einzeln oder in folgenden bevorzugten Kombinationen verwendet werden können: a und b, c und d, a und c, b und d oder a und b und c und d. Werden verschiedene Schaltungsmaßnahmen nach einer der vorher genannten Kombination zusammengeschaltet, müssen im zweiten Schaltungsteil Schalter eingesetzt werden, die die jeweils für die bestimmte Norm vorgeschriebene Verbindung zwischen den einzelnen Schaltelementen herstellen. Der zweite Frequenzteiler bei beiden Lösungen und der dritte Frequenzteiler bei der zweiten Lösung haben bei den verschiedenen Normen teilweise unterschiedliche Teilerverhältnisse. Bei der Kombination der Schaltungsmaßnahme kann der zweite bzw. dritte Frequenzteiler so ausgelegt werden, daß er Schaltelemente hat, die miteinander mit Hilfe von Schaltern so verbunden werden, daß Teilerverhältnisse entsprechend der gewünschten Norm entstehen.

Die Schaltungsanordnung teilt die Frequenz des jeweiligen Eingangssignals wahlweise für die verschiedenen Normen durch folgende Faktoren:

| | |
|---|---|
| VHS-NTSC: | 320 |
| VHS-PAL: | 321 |
| Video 8-NTSC: | 378 |
| Video 8-PAL: | 375. |

Einem Verknüpfungsglied wird an seinem zweiten Eingang ein Signal zugeführt, dessen Frequenz gegenüber der Frequenz des Signales am zweiten Eingang viel geringer ist. In der Regel tritt im Ausgangssignal des Verknüpfungsgliedes eine Flanke auf, wenn eine Flanke im Signal am ersten Eingang vorkommt. Eine solche Flanke ist durch einen Zustandswechsel von einem niedrigeren auf ein höheres Potential oder umgekehrt von einem höheren aus ein niedrigeres Potential gekennzeichnet. Tritt jedoch eine solche Flanke im Signal am zweiten Eingang auf, bewirkt dies einen Zustandswechsel im Ausgangssignal. Das Verknüpfungsglied summiert folglich die Anzahl der Flanken im Signal am ersten und zweiten Eingang. Mit Hilfe eines Verknüpfungsgliedes wird also die Anzahl der Perioden des Signals am Ausgang der Verknüpfungsschaltung gegenüber der Anzahl der Perioden im Signal am ersten Eingang um eine Periode erhöht, bezogen auf eine Periode des Signals am zweiten Eingang.

Um ein Signal mit der doppelten und der einfachen Zeilenfrequenz zur Verfügung zu haben, ist vorgesehen, daß bei der ersten Lösung der vierte Frequenzteiler im zweiten Schaltungsteil zwischen dem Ausgang des dritten Frequenzteilers und dem Ausgangsansachluß angeordnet ist. Bei der zweiten Lösung wird der vierte Frequenzteiler im ersten Schaltungsteil vor dem ersten Eingang des ersten Verknüpfungsgliedes angeordnet.

Da Frequenzen aus dem MHz-Bereich in den KHz-Bereich geteilt werden, wird bevorzugt eine gemischte Technik aus ECL-Technik und I²L-Technik verwendet. Die ECL-Technik kann bekanntlich hohe Frequenzen verarbeiten, benötigt aber mehr Leistung und mehr Chipfläche als die I²L-Technik, die erst einsetzbar ist bei Frequenzen ab einigen Kilohertz. Daher ist vorgesehen, daß das erste Schaltungsteil in ECL-Technik und das zweite Schaltungsteil in I²L-Technik realisiert ist.

In einer Ausführungsform für ein Verknüpfungsglied bildet der erste Eingang eines EXCLUSIV-ODER-Gatters den ersten Eingang des Verknüpfungsgliedes und ist der zweite Eingang des EXCLUSIV-ODER-Gatters mit dem Ausgang eines Kippgliedes verbunden, dessen Vorbereitungseingang den zweiten Eingang des Verknüpfungsgliedes bildet, und ist vorgesehen, daß in der Verbindung zwischen dem ersten Eingang des Verknüpfungsgliedes und einem Takteingang des Kippgliedes ein 90^{o}-Phasenschieber angeordnet ist. In diesem Verknüpfungsglied können keine Störspitzen auftreten, da eine Flanke im Signal am ersten Eingang nicht gleichzeitig mit einer aktiven (wirksamen) Flanke am Takteingang des EXCLUSIV-ODER-Gatters erscheint.

In einer Weiterbildung der Erfindung ist vorgesehen, daß der zweite Frequenzteiler nicht mehr als drei Kippglieder enthält, deren Verbindungen durch Steuerung so verändert werden, daß die entsprechenden Teilerverhältnisse realisierbar sind. Bei der ersten Lösung wird der zweite Frequenzteiler so eingestellt, daß er für die Video 8-Norm ein Teilerverhältnis von 7 und für die VHS-Norm ein Teilerverhältnis von 6 aufweist. Bei der zweiten Lösung kann der zweite Frequenzteiler mit zwei Kippglieder realisiert werden, deren Verbindungen durch Steuerung so verändert werden, daß für die PAL-Norm ein Teilerverhältnis von 3 und für die NTSC-Norm ein Teilerverhältnis von 4 realisierbar ist. Ebenso kann bei dieser Lösung der dritte Frequenzteiler mit drei Kippgliedern realisiert werden, die so verbunden werden, daß Teilerverhältnisse von 5, 7 und 8 eingestellt werden können.

Anhand der Zeichnungen wird im folgenden die Erfindung näher erläutert. Es zeigen:
Fig. 1 ein in einem Videorecorder üblichen Phasenregelkreis mit der erfindungsgemäßen Schaltungsanordnung,
Fig. 2 ein erstes Ausführungsbeispiel der Erfindung,
Fig. 3 ein Ausführungsbeispiel des in Fig. 2 verwendeten Verknüpfungsgliedes,
Fig. 4 ein Ausführungsbeispiel des in Fig. 2 verwendeten einstellbaren Frequenzteilers,
Fig. 5 ein Zustandsdiagramm zur Erläuterung des Frequenzteilers nach Fig. 4 und
Fig. 6 ein zweites Ausführungsbeispiel der Erfindung.

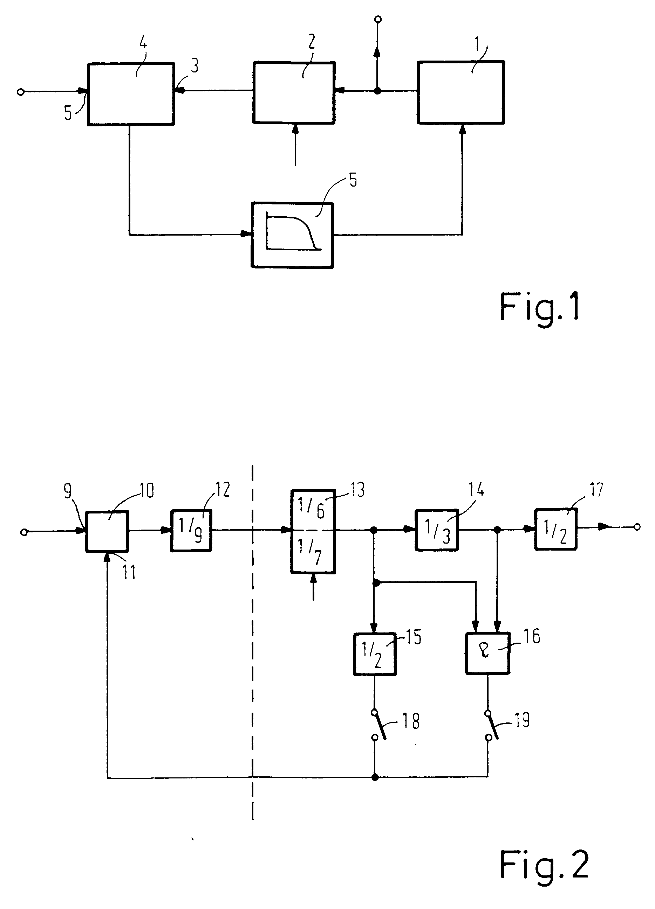

In Fig. 1 ist ein Phasenregelkreis dargestellt, der in einem Videorecorder dazu dient, die Frequenz eines Oszillatorsignals, welches in einem spannungsgesteuerten Oszillator 1 erzeugt wird, an die Zeilenfrequenz anzupassen. Der Oszillator 1 wird so gesteuert, daß die Frequenz des Oszillatorsignals ein ganzzahliges Vielfaches der Zeilenfrequenz ist. Unter der Frequenz eines Signals soll im folgenden die Anzahl der Perioden pro Zeiteinheit verstanden werden.

Das vom spannungsgesteuerten Oszillator 1 erzeugte Oszillatorsignal wird über eine erfindungsgemäße Schaltungsanordnung 2 zur Frequenzteilung einem ersten Eingang 3 einer Phasenvergleichsschaltung 4 zugeführt. Ein anderer Eingang 5 der Phasenvergleichsschaltung 4 erhält das zeilenfrequente Signal. Ein dem Phasenunterschied zwischen diesen beiden Signalen entsprechendes Ausgangssignal wird über einen Tiefpaß 5, der die höherfrequenten Signalanteile unterdrückt, zur Steuerung der Phase des im Oszillator 1 erzeugten Oszillatorsignals diesem zugeführt.

Der Oszillator 1 erzeugt vier Oszillatorsignale, deren jeweilige Frequenz durch die jeweilige Norm bestimmt wird. Im folgenden sind diese Frequenzen aufgelistet:

| | | |
|---|---|---|
| VHS-NTSC-Norm: | 320 x 15,75 kHz | = 5,04 MHz |
| VHS-PAL-Norm: | 321 x 15,625 kHz | = 5,016 MHz |
| Video 8-NTSC-Norm: | 378 x 15,75 kHz | = 5,95 MHz |
| Video 8-PAL-Norm: | 375 x 15,625 kHz | = 5,86 MHz. |

Die Schaltungsanordnung 2 muß also so ausgelegt werden, daß sie ein der jeweiligen Norm entsprechendes Frequenzteilerverhältnis aufweist.

In Fig. 2 ist ein erstes Ausführungsbeispiel der erfindungsgemäßen Schaltungsanordnung 2 dargestellt. Das Oszillatorsignal wird einem ersten Eingang 9 eines Verknüpfungsgliedes 10 zugeführt. Das Verknüpfungsglied 10 erhält noch ein weiteres Signal an einem Eingang 11. Wenn im Signal am Eingang 11 eine Flanke auftaucht, d.h. wenn ein Zustandswechsel von einem höheren auf ein niedrigeres Potential oder von einem niedrigeren auf ein höheres Potential vorkommt, wird eine Flanke in das Oszillatorsignal eingeschoben, d.h. das Ausgangssignal des Verknüpfungsgliedes 10 ist gegenüber dem Oszillatorsignal am ersten Eingang 9 mit einer zusätzlichen Flanke versehen worden.

Das Ausgangssignal des Verknüpfungsgliedes 10 wird über einen Frequenzteiler 12 mit einem Teilerverhältnis von 9 einem Frequenzteiler 13 zugeführt, der umschaltbar ist und der ein Teilerverhältnis von 6 oder von 7 aufweist. Der Ausgang des Frequenzteilers 13 ist mit dem Eingang eines Frequenzteilers 14 mit einem Teilerverhältnis von 3, mit einem Frequenzteiler 15, der ein Teilerverhältnis von 2 hat und mit dem ersten Eingang eines UND-Gatters 16 verbunden. Das Ausgangssignal des Frequenzteilers 14 wird einerseits über einen Frequenzteiler 17 mit einem Teilerverhältnis von 2, an dem das zeilenfrequente Ausgangssignal der erfindungsgemäßen Schaltungsanordnung 2 abnehmbar ist, und andererseits dem zweiten Eingang des UND-Gatters 16 zugeführt. Der Ausgang des Frequenzteilers 15 ist mit einem Schalter 18 verbunden und der Ausgang des UND-Gatters 16 mit einem Schalter 19. Der andere Anschlußpunkt des Schalters 18 und der andere des Schalters 19 sind an den Eingang 11 des Verknüpfungsgliedes 10 angeschlossen.

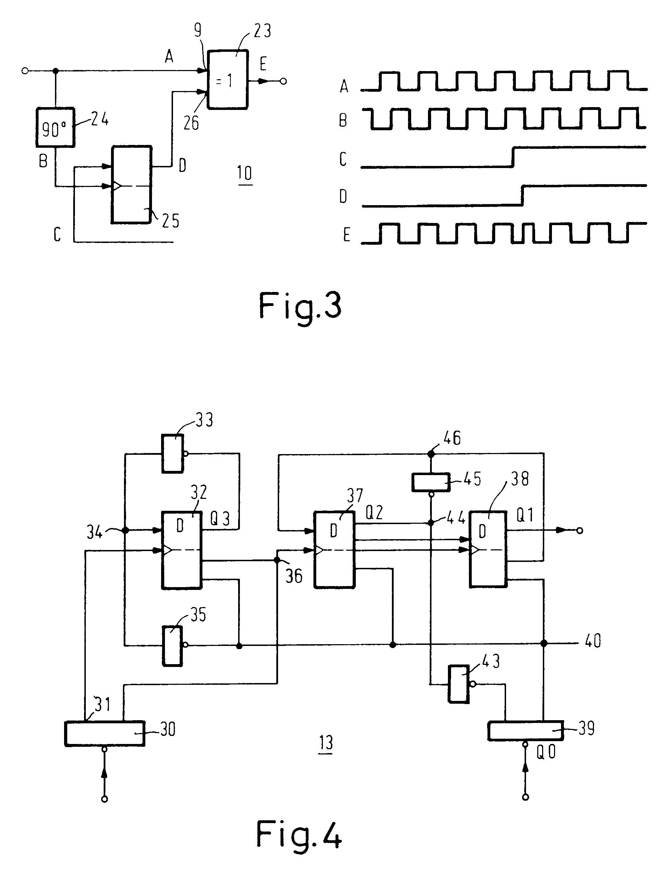

Ein Ausführungsbeispiel für das Verknüpfungsglied 10 ist in Fig. 3 dargestellt und wird im folgenden erläutert. Ein Signal A wird dem ersten Eingang, der auch der erste Eingang 9 des Verknüpfungsgliedes 10 ist, eines EXCLUSIV-ODER-Gatters 23 zugeführt. Das Signal A und weitere verwendete Signale in der Schaltungsanordnung nach Fig. 3 sind im nebenstehenden Impulsdiagramm dargestellt. Das Signal A wird weiterhin einem Phasenschieber 24 zugeführt, der das Signal A in der Phase um 90^{o} verschiebt und ein Signal B erzeugt, das einem Takteingang eines D-Kippgliedes 25 zugeleitet wird. Dem Vorbereitungseingang, also dem D-Eingang, der auch der zweite Eingang 11 des Verknüpfungsgliedes 10 ist, des D-Kippgliedes 25 wird ein Signal C zugeführt, das im nebenstehenden Diagramm einen Zustandswechsel von einem niedrigeren auf ein höheres Potential aufweist, d.h. im Signal C tritt eine Flanke auf. Das Ausgangssignal des D-Kippgliedes, das ist das Signal D, weist erst dann diesen Zustandswechsel auf, wenn eine Rückflanke im Signal B auftritt. Aus den Signalen A und D wird im EXCLUSIV-ODER-Gatter das Signal E gebildet, das gegenüber dem Signal A einen zusätzlichen Zustandswechsel aufweist und zwar dann, wenn im Signal D ein Zustandswechsel aufgetreten ist.

Die unterschiedlichen Teilerverhältnisse in der erfindungsgemäßen Schaltungsanordnung nach Fig. 2 werden durch Steuerung des Frequenzteilers 13 und der Schalter 18 und 19 realisiert. Der Frequenzteiler 13 und die beiden Schalter 18 und 19 werden dabei von einer hier nicht näher dargestellten logischen Schaltung angesteuert, die das Teilerverhältnis des Frequenzteilers 13, wie weiter unten beschrieben wird, vorgibt und die Schalter 18 und 19 öffnet oder schließt. Die logische Schaltung wertet z.B. binäre Signale aus, mit denen die jeweilige Norm festgelegt wird. Um ein Teilerverhältnis von 320 gemäß der VHS-NTSC-Norm zu verwirklichen, muß für den Frequenzteiler 13 ein Teilerverhältnis von 6 gewählt werden, der Schalter 18 offen und der Schalter 19 geschlossen sein. Der Frequenzteiler weist ein Teilerverhältnis von 321 gemäß der VHS-PAL-Norm auf, wenn der Schalter 18 geschlossen und der Schalter 19 offen ist und der Frequenzteiler 13 so eingestellt ist, daß er ein Teilerverhältnis von 6 hat. Bei der Video 8-NTSC- und PAL-Norm ist der Frequenzteiler 13 so eingestellt, daß er die ihm zugeführten Signale durch 7 teilt. Das Teilerverhältnis von 378 gemäß der Video 8-NTSC-Norm wird realisiert, indem die Schalter 18 und 19 offen sind. Das Teilerverhältnis von 375 gemäß der Video 8-PAL-Norm wird erreicht, indem der Schalter 18 geschlossen und der Schalter 19 offen ist.

Bei der Realisierung der Schaltungsanordnung in integrierter Schaltungstechnik kann eine ökonomische Lösung erreicht werden, indem ein erstes Schaltungsteil, bestehend aus dem Verknüpfungsglied 10 und dem Frequenzteiler 12, in ECL-Technik und ein zweites Schaltungsteil, bestehend aus dem Frequenzteilern 13, 14, 17 und 15, dem Verknüpfungsglied 16 und den Schaltern 18 und 19, in I²L-Technik aufgebaut wird. Die Grundprinzipien der ECL- und der I²L-Technik kann man z.B. dem Buch von Jovan Antula, Schaltungen der Mikroelektronik, Oldenbourg Verlag 1984, entnehmen. In Fig. 2 ist noch eine gestrichelte Linie eingezeichnet, die die Schnittstelle zwischen den beiden Techniken andeutet. Solche Schnittstellen sind aus integrierten Schaltungen bekannt, die eine gemischte Technologie verwenden, d.h. ECL- und I²L-Technik beinhalten. Es kann aber auch eine MOS-Technik verwendet werden, bei der das erste Schaltungsteil aus einer MOS-Technik mit einem hohen Stromverbrauch besteht, womit Signale mit hohen Frequenzen verarbeitet werden können, und das zweite Schaltungsteil aus einer MOS-Technik mit niedrigem Stromverbrauch, womit Signale mit niedrigen Frequenzen verarbeitet werden können.

In Fig. 4 ist ein Ausführungsbeispiel für den Frequenzteiler 13 der Fig. 2 in I²L-Technik dargestellt. Das in der Frequenz zu teilende Signal wird einem Inverter 30 zugeführt, dessen erster Ausgang 31 auf den Takteingang eines D-Kippgliedes 32 führt. Der Ausgang des D-Kippgliedes 32 ist an einen Inverter 33 angeschlossen. Das Ausgangssignal des Inverters 33 und das Ausgangssignal eines Inverters 35 werden in einem Knoten 34 verknüpft und dem D-Eingang des D-Kippgliedes 32 zugeführt. Ein solcher Knoten stellt in der I²L-Technik eine UND-Verknüpfung dar. Ein invertierter Ausgang des D-Kippgliedes 32 ist mit einem Knoten 36 verbunden, der noch eine weitere Verbindung zum zweiten Ausgang des Inverters 30 aufweist. Das Ausgangssignal des Knotens 36 wird dem Takteingang eines D-Kippgliedes 37 und dem Takteingang eines D-Kippgliedes 38 zugeführt. Ein Ausgang des D-Kippgliedes 37 ist mit dem D-Eingang des D-Kippgliedes 38 verbunden. Ein Ausgang des D-Kippgliedes 38 ist auch gleichzeitig der Ausgang des Frequenzteilers 13.

Der Eingang eines Inverters 39 ist der Steuereingang dieses Frequenzteilers 13. D.h. abhängig vom Zustand des Steuersignals weist der Frequenzteiler entweder ein Teilerverhältnis von 6 oder 7 auf. Ein Ausgang des Frequenzteilers 39 ist mit einem Knoten 40 verbunden. Weitere Eingänge des Knotens 40 sind mit je einem invertierten Ausgang der D-Kippglieder 32, 37 und 38 verbunden. Der Knoten 40 ist mit dem Eingang des Inverters 35 verbunden. Der zweite Ausgang des Inverters 39 ist über einen Inverter 43 an einen Knoten 44 angeschlossen. Der zweite Eingang des Knotens 44 ist mit einem weiteren Ausgang des D-Kippgliedes 37 verbunden. Das Ausgangssignal des Knotens 44 wird über einen Inverter 45 einem Knoten 46 zugeführt, dessen anderes Eingangssignal von einem invertierten Ausgang des D-Kippgliedes 38 kommt. Der Ausgang des Knotens 46 ist an den D-Eingang des D-Kippgliedes 37 angeschlossen.

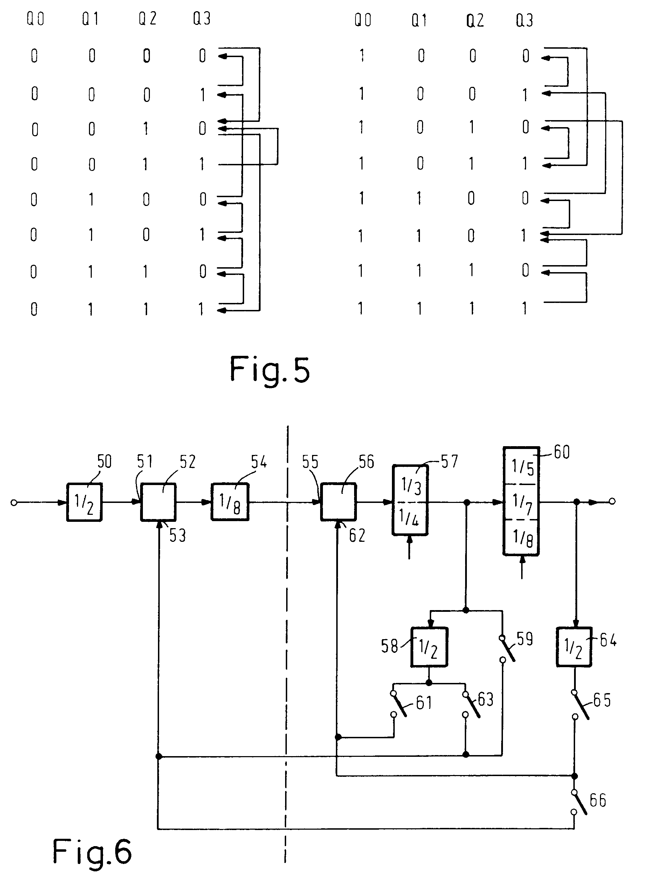

Im folgenden sei die Wirkungsweise des Frequenzteilers nach Fig. 4 mit Hilfe des Zustandsdiagramms in Fig. 5 erläutert. Signale, die auf einem hohen Potential liegen, werden im folgenden mit "1" und Signale die auf einem niedrigen Potential liegen mit "0" bezeichnet. Das Eingangssignal am Inverter 39 wird mit Q0, das Ausgangssignal des D-Kippgliedes 38 mit Q1, das Ausgangssignal des D-Kippgliedes 37 mit Q2 und das Ausgangssignal des D-Kippgliedes 32 mit Q3 bezeichnet.

Es sei weiter vorausgesetzt, daß eine Bezeichnung der Art "010" den Zustand der Signale Q1, Q2 und Q3 angibt, d.h. die ganz links stehende Zahl gibt den Zustand für Q1, die mittlere Zahl den für Q2 und die rechts stehende Zahl den für Q3 an. Ein Zustandswechsel von z.B. "110" auf "101" kann nur dann vorkommen, wenn im Eingangssignal am Inverter 30 eine aktive Flanke aufgetreten ist, was während jeder Periode einmal erfolgt. Daraus folgt, daß im Ausgangssignal Q1 höchstens zwei Zustandswechsel während sechs bzw. sieben Perioden des Eingangssignals am Inverter 30 auftreten dürfen, oder anders gesagt, eine Periode des Ausgangssignals Q1 entspricht sechs bzw. sieben Perioden des Eingangssignals am Inverter 30. Entspricht das Steuersignal Q0 am Inverter 39 einer "0", liegt ein Frequenzteiler mit einem Teilerverhältnis von 7 und entspricht es einer "1", liegt ein Frequenzteiler mit einem Teilerverhältnis von 6 vor.

Im folgenden wird die Schaltung nach Fig. 4 für einen Zustandswechsel von einem Zustand "101" zu einem Zustand "100" erläutert. Das Steuersignal Q0 entspricht einer "0", so daß ein Teiler mit einem Teilerverhältnis von 7 realisiert wird. Es werden zuerst die Zustände der verschiedenen Signale beschrieben, bevor eine aktive Flanke im Eingangssignal am Inverter 30 auftritt. Das Ausgangssignal des Inverters 39 entspricht einer "1". Da das Ausgangssignal Q1 des D-Kippgliedes 38 einer "1" entspricht, entspricht das invertierte Ausgangssignal dieses Kippgliedes einer "0". Das Ausgangssignal des Knotens 40 entspricht einer "0", da ein solcher Knoten in I²L-Technik eine UND-Verknüpfung darstellt, so daß das Ausgangssignal des Inverters 35 einer "1" entspricht. Am D-Eingang des Kippgliedes 32 liegt schließlich ein Zustand von "0" vor, da das Ausgangssignal des Inverters 33 einer "0" entspricht. Das Ausgangssignal des Knotens 46 liefert den Zustand von "0", da der invertierte Ausgang des D-Kippgliedes 38 eine "0" abgibt und der Inverter 45 ständig gesperrt ist, wenn das Steuersignal Q0 einem Zustand von "0" entspricht. Nach dem Auftreten einer aktiven Flanke im Eingangssignal des Inverters 30 wird der Zustand des Ausgangssignals Q3 zu "0". Da bei Auftreten der aktiven Flanke am invertierten Ausgang des D-Kippgliedes 32 eine "0" vorliegt, erhält der Takteingang des D-Kippgliedes 37 keine aktive Flanke, so daß das Ausgangssignal Q2 in dem alten Zustand bleibt. Ebenso bleibt das Ausgangssignal Q1 im alten Zustand. Bis zur nächsten aktiven Flanke liegt nun der Zustand "100" vor.

Entspricht das Steuersignal Q0 einer "0", d.h. es wird ein Teilerverhältnis von 7 realisiert, ergibt sich gemäß der Fig. 5a der folgende Zustandszyklus:
"001", "000", "010", "111", "110", "101", "100", und dann beginnt der Zyklus von neuem bei "001". Der Zustand "011", der in diesem Zyklus fehlt, kann z.B. beim Einschalten auftreten. Die Frequenzteilerfunktion wird jedoch dadurch nicht beeinflußt, da der nächste Zustand "010" ist.

Wenn das Steuersignal einen Zustand von "1" aufweist, wird ein Teilerverhältnis von 6 mit der Schaltungsanordnung nach Fig. 4 realisiert. Dabei ergibt sich gemäß Fig. 5b der folgende Zustandszyklus:
"001", "000", "011", "010", "101", "100", und dann tritt wieder der Zustand "001" auf. Beim Einschalten können die darin fehlenden Zustände "111" oder "110" auftreten. Nach einem bzw. zwei Zuständen ergibt sich jedoch der Zustand "101", so daß der Zustandszyklus für ein Teilerverhältnis von 6 wieder erreicht ist. In der Fig. 5 sind die beiden Zyklen für ein Teilerverhältnis von 6 bzw. 7 durch Pfeile verdeutlicht.

In Fig. 6 ist ein zweites Ausführungsbeispiel der erfindungsgemäßen Schaltungsanordnung 2 dargestellt. Das Oszillatorsignal wird einem Frequenzteiler 50 mit einem Teilerverhältnis von 2 zugeführt. Der Ausgang des Frequenzteilers 50 ist mit einem ersten Eingang 51 eines Verknüpfungsgliedes 52 verbunden, das noch einen zweiten Eingang 53 aufweist. Das Ausgangssignal des Verknüpfungsgliedes 52 wird über einen Frequenzteiler 54 mit einem Teilerverhältnis von 8 einem Eingang 55 eines weiteren Verknüpfungsgliedes 56 zugeführt. Der Ausgang des Verknüpfungsgliedes 56 ist mit einem umschaltbaren Frequenzteiler 57 verbunden, bei dem ein Teilerverhältnis von 3 oder 4 einstellbar ist.

Das Ausgangssignal des Frequenzteilers 57 wird einem weiteren Frequenzteiler 60, einem Frequenzteiler 58 mit einem Teilerverhältnis von 2 und über einen Schalter 59 dem zweiten Eingang 53 des Verknüpfungsgliedes 52 zugeführt. Der Frequenzteiler 60 kann so eingestellt werden, daß dieser die Frequenzverhältnisse von 5, 7 oder 8 aufweist. Das Ausgangssignal des Frequenzteilers 58 wird einerseits über einen Schalter 61 dem zweiten Eingang 62 des Verknüpfungsgliedes 56 und andererseits über einen Schalter 63 dem zweiten Eingang 53 des Verknüpfungsgliedes 52 zugeleitet. Das Ausgangssignal des Frequenzteilers 60, daß das Ausgangssignal der erfindungsgemäßen Schaltungsanordnung 2 ist, wird über einen Frequenzteiler 64 mit einem Teilerverhältnis von 2 über einen Schalter 65 einerseits dem zweiten Eingang 62 des Verknüpfungsgliedes 56 und andererseits über einen Schalter 66 dem zweiten Eingang 53 des Verknüpfungsgliedes 52 zugeführt. Die Verknüpfungsglieder 52 und 56 können so aufgebaut sein, wie das Verknüpfungsglied nach Fig. 3. Die Verknüpfungsglieder sollen im Ausgangssignal eine zusätzliche Flanke gegenüber dem Signal am ersten Eingang einfügen, wenn eine Flanke im Signal am zweiten Eingang auftritt.

Die unterschiedlichen Teilerverhältnisse in der erfindungsgemäßen Schaltungsanordnung nach Fig. 6 werden durch Steuerung der Frequenzteiler 57 und 60 und der Schalter 59, 61, 63, 65 und 66 realisiert. Ein Teilerverhältnis von 320 gemäß der VHS-NTSC-Norm wird erreicht, indem im Frequenzteiler 57 ein Teilerverhältnis von 4 und im Frequenzteiler 60 ein Teilerverhältnis von 5 gewählt wird und wenn alle Schalter geöffnet sind. Der Frequenzteiler weist ein Teilerverhältnis von 321 gemäß der VHS-PAL-Norm auf, wenn die Schalter 63 und 65 geschlossen sind und alle anderen geöffnet sind und der Frequenzteiler 57 so eingestellt ist, daß er ein Teilerverhältnis von 3 hat und der Frequenzteiler 60 so, daß er ein Teilerverhältnis von 7 hat. Das Teilerverhältnis von 378 gemäß der Video 8-NTSC-Norm wird realisiert, indem die Schalter 59 und 61 geschlossen und die anderen Schalter geöffnet sind und der Frequenzteiler 57 ein Teilerverhältnis von 4 und der Frequenzteiler 60 ein Teilerverhältnis von 7 aufweist. Um gemäß der Video 8-PAL-Norm ein Teilerverhältnis von 375 zu verwirklichen, müssen die Schalter 65 und 66 geschlossen sein und die anderen geöffnet und der Frequenzteiler 57 so eingestellt werden, daß er ein Teilerverhältnis von 3 hat und der Frequenzteiler 60 so, daß er ein Teilerverhältnis von 8 hat.

Auch bei der Schaltungsanordnung nach der Fig. 6 wird eine ökonomische Lösung erreicht, wenn die Frequenzteiler 50 und 54 das Verknüpfungsglied 52 in ECL-Technik und die restlichen Schaltelemente in I²L-Technik aufgebaut werden.

Die Schnittstelle zwischen den beiden Techniken ist in der Zeichnung der Fig. 6 ebenfalls durch eine gestrichelte Linie angedeutet.

In den Fig. 2 und 6 sind zwei Ausführungsbeispiele nach der Erfindung vorgestellt, bei der ein Teilerverhältnis gemäß der VHS- bzw. Video 8-Norm für das PAL- oder NTSC-Verfahren eingestellt werden kann. Die Schaltungen nach der jeweiligen Norm lassen sich jedoch auch einzeln oder in Kombination realisieren. So können z.B. Schaltungen aufgebaut werden, die für VHS-Videorecorder geeignet sind, bei denen zwischen PAL oder NTSC gewählt wird oder die für Video 8-Videorecorder geeignet sind, bei denen zwischen PAL oder NTSC gewählt wird.

## Patentansprüche

1. Schaltungsanordnung für einen Videorecorder zum Erzeugen eines zeilenfrequenten Signals mittels verschiedener Frequenzteiler aus einem Eingangssignal, mit
- einem Eingangsanschuß zum Empfangen des Eingangssignals und
- einem Ausgangsanschluß zum Abgeben des zeilenfrequenten Signals,
dadurch gekennzeichnet, daß ein erster Schaltungsteil ein erstes Verknüpfungsglied (10) mit zwei Eingängen und einem Ausgang und einen ersten Frequenzteiler (12) mit einem Teilerverhältnis von 9 enthält, daß der Eingangsanschluß mit einem ersten Eingang (9) des Verknüpfungsgliedes (10) gekoppelt ist, dessen Ausgang mit einem Eingang des ersten Frequenzteilers gekoppelt ist, daß das Verknüpfungsglied (10) eine Flanke im Signal am ersten Eingang (9) einfügt, wenn in einem Signal an dem zweiten Eingang (11) des Verknüpfungsgliedes (10) eine Flanke auftritt, daß ein mit einem Ausgang des ersten Frequenzteilers gekoppelter zweiter Schaltungsteil einen zweiten Frequenzteiler (13) und einen dritten Frequenzteiler (14) mit einem Teilerverhältnis von 3 enthält, dessen Ausgang mit dem Ausgangsanschluß gekoppelt ist, daß ein vierter Frequenzteiler (17) mit einem Teilerverhältnis von 2 im Signalweg zwischen dem Eingangsanschluß und dem Ausgangsanschluß angeordnet ist und daß folgende Schaltungsmaßnahmen einzeln oder in Kombination vorgesehen sind,
a) für die VHS-NTSC-Norm ist der Ausgang des ersten Frequenzteilers (12) über den zweiten Frequenzteiler (13) mit einem Teilerverhältnis von 6 einerseits mit einem ersten Eingang eines UND-Gatters (16) und andererseits über den dritten Frequenzteiler (14) mit einem zweiten Eingang des UND-Gatters (16) gekoppelt, dessen Ausgang mit dem zweiten Eingang (11) des ersten Verknüpfungsgliedes (10) gekoppelt ist,
b) für die VHS-PAL-Norm ist der Ausgang des ersten Frequenzteilers (12) über den zweiten Frequenzteiler (13) mit einem Teilerverhältnis von 6 einerseits über einen fünften Frequenzteiler (15) mit einem Teilerverhältnis von 2 mit dem zweiten Eingang (11) des ersten Verknüpfungsgliedes (10) und andererseits mit dem dritten Frequenzteiler (14) gekoppelt,
c) für die Video 8-NTSC-Norm ist der Ausgang des ersten Frequenzteilers (12) über den zweiten Frequenzteiler (13) mit einem Teilerverhältnis von 7 mit dem dritten Frequenzteiler (14) gekoppelt,
d) für die Video 8-PAL-Norm ist der Ausgang des ersten Frequenzteilers (12) über den zweiten Frequenzteiler (13) mit einem Teilerverhältnis von 7 einerseits über einen fünften Frequenzteiler (15) mit einem Teilerverhältnis von 2 mit dem zweiten Eingang (11) des ersten Verknüpfungsgliedes (10) und andererseits mit dem dritten Frequenzteiler (14) gekoppelt
wobei im Fall, daß verschiedene dieser Schaltungsmaßnahmen in Kombination zusammengeschaltet sind, im zweiten Schaltungsteil Schalter (18, 19) eingesetzt sind zum Herstellen der jeweils für die bestimmte Norm vorgeschriebenen Verbindung zwischen den einzelnen Schaltelementen.

2. Schaltungsanordnung für einen Videorecorder zum Erzeugen eines zeilenfrequenten Signals mittels verschiedener Frequenzteiler aus einem Eingangssignal, mit
- einem Eingangsanschluß zum Empfangen des Eingangssignals, und
- einem Ausgangsanschluß zum Abgeben des zeilenfrequenten Signals,
dadurch gekennzeichnet, daß ein erster Schaltungsteil ein erstes Verknüpfungsglied (52) mit zwei Eingängen und einem Ausgang und einen ersten Frequenzteiler (54) mit einem Teilerverhältnis von 8 enthält, daß der Eingangsanschluß mit einem ersten Eingang (51) des ersten Verknüpfungsgliedes (52) gekoppelt ist, dessen Ausgang mit einem Eingang des ersten Frequenzteilers (54) gekoppelt ist,
daß ein mit einem Ausgang des ersten Frequenzteilers (54) gekoppelter zweiter Schaltungsteil ein zweites Verknüpfungsglied (56) mit zwei Eingängen und einem Ausgang, einen zweiten Frequenzteiler (57) und einen dritten Frequenzteiler (60) enthält, dessen Ausgang mit dem Ausgangsanschluß gekoppelt ist,
daß beide Verknüpfungsglieder (52 bzw. 56) eine Flanke im Signal am ersten Eingang (51 bzw. 55) einfügen, wenn in einem Signal am zweiten Eingang (53 bzw. 62) des betreffenden Verknüpfungsgliedes (52 bzw. 56) eine Flanke auftritt,
daß ein vierter Frequenzteiler (50) mit einem Teilerverhältnis von 2 im Signalweg zwischen dem Eingangsanschluß und dem Ausgangsanschluß angeordnet ist und daß folgende Schaltungsmaßnahmen einzeln oder in Kombination angewendet sind,
a) für die VHS-NTSC-Norm ist der Ausgang des zweiten Verknüpfungsgliedes (56) über den zweiten Frequenzteiler (57) mit einem Teilerverhältnis von 4 mit dem dritten Frequenzteiler (60) mit einem Teilerverhältnis von 5 gekoppelt,
b) für die VHS-PAL-Norm ist der Ausgang des zweiten Verknüpfungsgliedes (56) über den zweiten Frequenzteiler (57) mit einem Teilerverhältnis von 3 einerseits über einen fünften Frequenzteiler (58) mit einem Teilerverhältnis von 2 mit dem zweiten Eingang (53) des ersten Verknüpfungsgliedes (52) gekoppelt und andererseits mit dem dritten Frequenzteiler (60) mit einem Teilerverhältnis von 7, dessen Ausgang über einen sechsten Frequenzteiler (64) mit einem Teilerverhältnis von 2 mit dem zweiten Eingang (62) des zweiten Verknüpfungsgliedes (56) gekoppelt ist,
c) für die Video 8-NTSC-Norm ist der Ausgang des zweiten Verknüpfungsgliedes (56) mit dem Eingang des zweiten Frequenzteilers (57) mit einem Teilerverhältnis von 4 gekoppelt, dessen Ausgang mit dem zweiten Eingang (53) des ersten Verknüpfungsgliedes (52), über einen fünften Frequenzteiler (58) mit einem Teilerverhältnis von 2 mit dem zweiten Eingang (62) des zweiten Verknüpfungsgliedes (56) und mit einem Eingang des dritten Frequenzteilers (60) mit einem Teilerverhältnis von 7 gekoppelt ist,
d) für die Video 8-PAL-Norm ist der Ausgang des zweiten Verknüpfungsgliedes (56) über den zweiten Frequenzteiler (57) mit einem Teilerverhältnis von 3 mit dem dritten Frequenzteiler (60) mit einem Teilerverhältnis von 8 gekoppelt, dessen Ausgang über einen sechsten Frequenzteiler (64) mit einem Teilerverhältnis von 2 mit dem zweiten Eingang (53 bzw. 62) des ersten und zweiten Verknüpfungsgliedes (52, 56) gekoppelt ist,
wobei im Fall, daß verschiedene dieser Schaltungsmaßnahmen in Kombination zusammengeschaltet sind, im zweiten Schaltungsteil Schalter (59, 61, 63, 65, 66) eingesetzt sind zum Herstellen der jeweils für die bestimmte Norm vorgeschriebenen Verbindung zwischen den einzelnen Schaltelementen.

3. Schaltungsanordnung nach Anspruch 1,
dadurch gekennzeichnet, daß der vierte Frequenzteiler (17) im zweiten Schaltungsteil zwischen dem Ausgang des dritten Frequenzteilers (14) und dem Ausgangsanschluß angeordnet ist.

4. Schaltungsanordnung nach Anspruch 2,
dadurch gekennzeichnet, daß der vierte Frequenzteiler (50) im ersten Schaltungsteil vor dem ersten Eingang (51) des ersten Verknüpfungsgliedes (52) angeordnet ist.

5. Schaltungsanordnung nach einem der vorhergehenden Ansprüche, dadurch gekennzeichnet, daß das erste Schaltungsteil in ECL-Technik und das zweite Schaltungsteil in I²L-Technik realisiert ist.

6. Schaltungsanordnung nach einem der vorhergehenden Ansprüche, dadurch gekennzeichnet, daß der erste Eingang eines EXCLUSIV-ODER-Gatters (23) den ersten Eingang (9) des Verknüpfungsgliedes (10) bildet und der zweite Eingang (26) des EXCLUSIV-ODER-Gatters (23) mit dem Ausgang eines Kippgliedes (25) verbunden ist, dessen Vorbereitungseingang den zweiten Eingang des Verknüpfungsgliedes bildet und daß in der Verbindung zwischen dem ersten Eingang (9) des Verknüpfungsgliedes (10) und einem Takteingang des Kippgliedes (25) ein 90^{o}-Phasenschieber (24) angeordnet ist (Fig. 3)

7. Schaltungsanordnung nach einem der vorhergehenden Ansprüche, dadurch gekennzeichnet, daß der zweite Frequenzteiler (13; 57) nicht mehr als drei Kippglieder enthält, deren Verbindungen durch Steuerung so verändert werden, daß die entsprechenden Teilerverhältnisse realisierbar sind.

## Claims

1. A circuit arrangement for a video recorder, for deriving a line-frequency signal from an input signal by means of a plurality of frequency dividers, the arrangement comprising:
- an input terminal for receiving the input signal, and
- an output terminal for supplying the line-frequency signal,
characterized in that a first section of the circuit arrangement comprises a first logic circuit (10) having two inputs and one output, and a first frequency divider (12) having a dividing ratio of 9, the input terminal is coupled to a first input (9) of the logic circuit (10) whose output is coupled to an input of the first frequency divider, the logic circuit (10) inserts an edge into the signal on the first input (9) if an edge occurs in a signal on the second input (11) of the logic circuit (10), a second section of the circuit arrangement, which section is coupled to an output of the first frequency divider, comprises second frequency divider (13) and a third frequency divider (14) having a dividing ratio of 3 and having its output coupled to the output terminal, a fourth frequency divider (17) having a dividing ratio of 2 is arranged in the signal path between the input terminal and the output terminal, and the following steps are applied separately or in combination,
a) for the VHS-NTSC standard the output of the first frequency divider (12) is coupled to a first input of an AND gate (16) *via* the second frequency divider (13) having a dividing ratio of 6, and to a second input of the AND gate (16) *via* the third frequency divider (14), the output of said AND gate being coupled to the second input (11) of the first logic circuit (10),
b) for the VHS-PAL standard the output of the first frequency divider (12) is coupled, *via* the second frequency divider (13) having a dividing ratio of 6, to the second input (11) of the first logic circuit (10) *via* a fifth frequency divider (15) having a dividing ratio of 2, and to the third frequency divider (14),
c) for the Video-8 NTSC standard the output of the first frequency divider (12) is coupled to the third frequency divider (14) *via* the second frequency divider (13) having a dividing ratio of 7,
d) for the Video-8 PAL standard the output of the first frequency divider (12) is coupled, *via* the second frequency divider (13) having a dividing ratio of 7, to the second input (11) of the first logic circuit (10) *via* a fifth frequency divider (15) having a dividing ratio of 2, and to the third frequency divider (14),
whilst in the case that several of these steps are combined the second section comprises switches (18, 19) to provide for each specific standard the required connections between the individual circuit elements.

2. A circuit arrangement for a video recorder, for deriving a line-frequency signal from an input signal by means of a plurality of frequency dividers, the arrangement comprising:
- an input terminal for receiving the input signal, and
- an output terminal for supplying the line-frequency signal,
characterized in that a first section of the circuit arrangement comprises a first logic circuit (52) having two inputs and one output, and a first frequency divider (54) having a dividing ratio of 8, the input terminal is coupled to a first input (51) of the first logic circuit (52) whose output is coupled to an input of the first frequency divider (54), a second section of the circuit arrangement, which section is coupled to an output of the first frequency divider (54), comprises a second logic circuit (56) having two inputs and one output, a second frequency divider (57), and a third frequency divider (60) whose output is coupled to the output terminal,
the two logic circuits (52 and 56) are constructed to insert an edge into the signal on the first input (51 and 55 respectively) if a signal on the second input (53 and 62 respectively) of the relevant logic circuit (52 and 56 respectively) contains an edge, a fourth frequency divider (50) having a dividing ratio of 2 is arranged in the signal path between the input terminal and the output terminal, and the following steps are applied separately or in combination,
a) for the VHS NTSC standard the output of the second logic circuit (56) is coupled to the third frequency divider (60) having a dividing ratio of 5 *via* the second frequency divider (57) having a dividing ratio of 4,
b) for the VHS PAL standard the output of the second logic circuit (56) is coupled, *via* the second frequency divider (57) having a dividing ratio of 3, to the second input (53) of the first logic circuit (52) *via* a fifth frequency divider (58) having a dividing ratio of 2 and to the third frequency divider (60) having a dividing ratio of 7, the third frequency divider having its output coupled to the second input (62) of the second logic circuit (56) *via* a sixth frequency divider (56) having a dividing ratio of 2,
c) for the Video-8 NTSC standard the output of the second logic element (56) is coupled to the input of the second frequency divider (57) having a dividing ratio of 4 and having its output coupled to the second input (53) of the first logic circuit (52), to the second input (62) of the second logic circuit (56) *via* a fifth frequency divider (58) having a dividing ratio of 2, and to an input of the third frequency divider (60) having a dividing ratio of 7,
d) for the Video-8 PAL standard the output of the second logic circuit (56) is coupled to the third frequency divider (60) having a dividing ratio of 8 *via* the second frequency divider (57) having a dividing ratio of 3, the output of said third frequency divider being coupled to the second input (53 and 62 respectively) of the first and the second logic circuit (52, 56) *via* a sixth frequency divider (64) having a dividing ratio of 2,
whilst in the case that several of these steps are combined the second section comprises switches (59, 61, 63, 65, 66) to provide for each specific standard the required connections between the individual circuit elements.

3. A circuit arrangement as claimed in Claim 1, characterized in that the fourth frequency divider (17) is arranged in the second section between the output of the third frequency divider (14) and the output terminal.

4. A circuit arrangement as claimed in Claim 2, characterized in that the fourth frequency divider (50) is arranged in the first section before the first input (51) of the first logic circuit (52).

5. A circuit arrangement as claimed in any one of the preceding Claims, characterized in that the first section is constructed in ECL technology and the second section is constructed in I²L technology.

6. A circuit arrangement as claimed in any one of the preceding Claims, characterized in that the first input of an EXCLUSIVE-OR gate (23) constitutes the first input (9) of the logic circuit (10) and the second input (26) of the EXCLUSIVE-OR gate (23) is connected to the output of a flip-flop (25) whose enable input constitutes the second input of the logic circuit, and a 90° phase shifter is arranged in the connection between the first input (9) of the logic circuit (10) and a clock input of the flip-flop (25) (Fig.3).

7. A circuit arrangement as claimed in any one of the preceding Claims, characterized in that the second frequency divider (13; 57) does not comprise more than three flip-flops whose connections can be controlled so as to provide the appropriate dividing ratios.

## Revendications

1. Montage de circuit pour magnétoscope destiné à produire un signal à fréquence de lignes au moyen de divers diviseurs de fréquence à partir d'un signal d'entrée, comportant :
- une borne d'entrée pour recevoir le signal d'entrée, et
- une borne de sortie pour délivrer le signal à fréquence de lignes,
caractérisé en ce qu'une première partie de circuit contient un premier élément logique (10) avec deux entrées et une sortie et un premier diviseur de fréquence (12) à rapport de division de 9, que la borne d'entrée est couplée à une première entrée (9) de l'élément logique (10), dont la sortie est couplée à une entrée du premier diviseur de fréquence, que l'élément logique (10) introduit un flanc d'impulsion dans le signal à la première entrée (9) lorsqu'un flanc apparaît dans un signal à la seconde entrée (11) de l'élément logique (10), qu'une seconde partie de circuit couplée à une sortie du premier diviseur de fréquence comporte un deuxième diviseur de fréquence (13) et un troisième diviseur de fréquence (14) à rapport de division de 3, dont la sortie est couplée à la borne de sortie, qu'un quatrième diviseur de fréquence (17) à rapport de division de 2 est installé dans le chemin du signal entre la borne d'entrée et la borne de sortie et que les mesures suivantes en matière de circuit sont prévues séparément ou en combinaison :
a) pour la norme VHS-NTSC, la sortie du premier diviseur de fréquence (12) est couplée via le deuxième diviseur de fréquence (13) à rapport de division de 6 d'une part, à une première entrée d'une porte ET (16) et, d'autre part, via le troisième diviseur de fréquence (14), à une seconde entrée de la porte ET (16), dont la sortie est couplée à la seconde entrée (11) du premier élément logique (10);
b) pour la norme VHS-PAL, la sortie du premier diviseur de fréquence (12) est couplée via le deuxième diviseur de fréquence (13) à rapport de division de 6, d'une part, via un cinquième diviseur de fréquence (15) à rapport de division de 2 à la seconde entrée (11) du premier élément logique (10) et, d'autre part, au troisième diviseur de fréquence (14);
c) pour la norme Vidéo 8-NTSC, la sortie du premier diviseur de fréquence (12) est couplée via le deuxième diviseur de fréquence (13) à rapport de division de 7 au troisième diviseur de fréquence (14);
d) pour la norme Vidéo 8-PAL, la sortie du premier diviseur de fréquence (12) est couplée via le deuxième diviseur de fréquence (13) à rapport de division de 7, d'une part, via un cinquième diviseur de fréquence (15) à rapport de division de 2 à la seconde entrée (11) du premier élément logique (10) et, d'autre part, au troisième diviseur de fréquence (14);
étant entendu que dans le cas où plusieurs de ces mesures en matière de circuit sont prises en combinaison, des commutateurs (18, 19) seront utilisés dans la seconde partie de circuit pour établir la connexion chaque fois prescrite pour la norme déterminée entre les composants individuels.

2. Montage de circuit pour magnétoscope destiné à produire un signal à fréquence de lignes au moyen de divers diviseurs de fréquence à partir d'un signal d'entrée, comportant :
- une borne d'entrée pour recevoir le signal d'entrée et
- une borne de sortie pour délivrer le signal à fréquence de lignes,
caractérisé en ce qu'une première partie de circuit contient un premier élément logique (52) avec deux entrées et une sortie et un premier diviseur de fréquence (54) à rapport de division de 8, que la borne d'entrée est couplée à une première entrée (51) du premier élément logique (52), dont la sortie est couplée à une entrée du premier diviseur de fréquence (54);
qu'une seconde partie de circuit couplée à une sortie du premier diviseur de fréquence (54) comporte un second élément logique (56) avec deux entrées et une sortie, un deuxième diviseur de fréquence (57) et un troisième diviseur de fréquence (60) dont la sortie est couplée à la borne de sortie;
que les deux éléments logiques (52 ou 56) introduisent un flanc d'impulsion dans le signal à la première entrée (51 ou 55) si un flanc apparaît dans un signal à la seconde entrée (53 ou 62) de l'élément logique (52 ou 56) en question;
qu'un quatrième diviseur de fréquence (50) à rapport de division de 2 est disposé dans le trajet du signal entre la borne d'entrée et la borne de sortie et que les mesures suivantes en matière de circuit sont utilisées séparément ou en combinaison :
a) pour la norme VHS-NTSC, la sortie du second élément logique (56) est couplée via le deuxième diviseur de fréquence (57) à rapport de division de 4 au troisième diviseur de fréquence (60) à rapport de division de 5;
b) pour la norme VHS-PAL, la sortie du second élément logique (56) est couplée via le deuxième diviseur de fréquence (57) à rapport de division de 3, d'une part, via un cinquième diviseur de fréquence (58) à rapport de division de 2 à la seconde entrée (53) du premier élément logique (52) et, d'autre part, au troisième diviseur de fréquence (60) à rapport de division de 7, dont la sortie est couplée via un sixième diviseur de fréquence (64) à rapport de division de 2 à la seconde entrée (62) du second élément logique (56);
c) pour la norme Vidéo 8-NTSC, la sortie du second élément logique (56) est couplée à l'entrée du deuxième diviseur de fréquence (57) à rapport de division de 4 dont la sortie est couplée à la seconde entrée (53) du premier élément logique (52), via un cinquième diviseur de fréquence (58) à rapport de division de 2 à la seconde entrée (62) du second élément logique (56) et à une entrée du troisième diviseur de fréquence (60) à rapport de division de 7;
d) pour la norme Vidéo 8-PAL, la sortie du seconde élément logique (56) est couplée via le deuxième diviseur de fréquence (57) à rapport de division de 3 au troisième diviseur de fréquence (60) à rapport de division de 8, dont la sortie est couplée via un sixième diviseur de fréquence (64) à rapport de division de 2 à la second entrée (53 ou 62) du premier et du second éléments logiques (52 ou 56);
étant entendu que, dans le cas où plusieurs de ces mesures en matière de circuit sont prises en combinaison, des commutateurs sont utilisés dans la seconde partie de circuit (59, 61, 63, 65, 66) pour établir la connexion chaque fois prescrite pour la norme déterminée entre les composants individuels.

3. Montage de circuit selon la revendication 1, caractérisé en ce que le quatrième diviseur de fréquence (17) est installé dans la seconde partie de circuit entre la sortie du troisième diviseur de fréquence (14) et la borne de sortie.

4. Montage de circuit selon la revendication 2, caractérisé en ce que le quatrième diviseur de fréquence (50) est installé dans la première partie de circuit devant la première entrée (51) du premier élément logique (52).

5. Montage de circuit selon l'une quelconque des revendications précédentes, caractérisé en ce que la première partie de circuit est réalisée en technique ECL et la seconde partie du circuit est réalisée en technique I²L.

6. Montage de circuit selon l'une quelconque des revendications précédentes, caractérisé en ce que la première entrée d'une porte OU eclusif (23) forme la première entrée (9) de l'élément logique (10) et la seconde entrée (26) de la porte OU exclusif (23) est connectée à la sortie d'une bascule (25) dont l'entrée de préparation constitue la seconde entrée de l'élément logique et qu'un déphaseur de 90° (24) est installé dans la connexion entre la première entrée (9) de l'élément logique (10) et une entrée d'horloge de la bascule (25) (Fig. 3).

7. Montage de circuit selon l'une quelconque des revendications précédentes, caractérisé en ce que le deuxième diviseur de fréquence (13,57) ne contient pas plus de trois bascules dont les connexions sont modifiées par commande de telle sorte que les rapports de division correspondants soit réalisables.
